(19) Europäisches Patentamt
European Patent Office
Office européen des brevets

(11) Publication number: **0 236 480 B1**

(12) # EUROPEAN PATENT SPECIFICATION

(45) Date of publication of patent specification: **29.07.92**

(51) Int. Cl.[5]: **C01B 3/02**

(21) Application number: **86906065.7**

(22) Date of filing: **11.09.86**

(86) International application number: **PCT/US86/01877**

(87) International publication number: **WO 87/01731 (26.03.87 87/07)**

The file contains technical information submitted after the application was filed and not included in this specification

(54) **PRODUCTION OF HYDROGEN BY DESERPENTINIZATION OF ULTRAMAFIC ROCK.**

(30) Priority: **12.09.85 US 775283**
**25.07.86 US 886696**

(43) Date of publication of application: **16.09.87 Bulletin 87/38**

(45) Publication of the grant of the patent: **29.07.92 Bulletin 92/31**

(84) Designated Contracting States: **AT BE CH DE FR GB IT LI LU NL SE**

(56) References cited:
**US-A- 1 031 498**
**US-A- 3 215 494**
**US-A- 3 954 943**
**US-A- 4 180 433**
**US-A- 4 192 707**
**US-A- 4 259 146**

(73) Proprietor: **ULTRAMAFIC TECHNOLOGY, INC.**
**6030 Connecticut Avenue**
**Kansas City, MO 64120(US)**

(72) Inventor: **MORENCY, Maurice**
**112 de Picardie**
**St. Lambert, Ouebec J4S IT6(CA)**

(74) Representative: **McCallum, William Potter et al**
**Cruikshank & Fairweather 19 Royal Exchange Square**
**Glasgow G1 3AE Scotland(GB)**

EP 0 236 480 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

CHEMICAL ABSTRACTS, vol. 96, 1982, page 226, abstract no. 166238r, Columbus, Ohio, US; G. GABRA et al.: "Magnesia activation by dehydroxylation of asbestos residue from Ouebec (Canada)", & CIM BULL. 1982, 75(838), 156-62

CHEMICAL ABSTRACTS, vol. 89, 1978, page 463, abstract 204834x, Columbus, Ohio, US; N. BANZARAKSHEEV et al.: "Study of the dehydroxylation of some asbestos by a proton magnetic resonance method", & IZV. AKAD. NAUK SSSR, NEORG. MATER. 1978, 14(8), 1550-1

CHEMICAL ABSTRACTS, vol. 87, 1977, page 163, abstract no. 42072b, Columbus, Ohio, US; L.I. KRAVTSOVA: " Deserpentinization in ultrabasic rocks of the Alapaevsk-Asbest intrusion", & TR. SVERDL. GORN. INST. 1975, 106, 166-9

CHEMICAL ABSTRACTS, vol. 72, 1970, page 118, abstact no. 5071v, Columbus, Ohio, US; V.A. PUGIN et al.: "Serpentinization and deserpentinization reactions", & GEOKHIMIYA 1969, (10), 1188-94

## Description

### Technical Field

This invention relates to the production of hydrogen by deserpentinization of ultramafic rock or certain clay materials.

### Background Art

For decades, the mining of asbestos has been carried out on a vast scale in a number of countries including Canada and the United States. In the Thetford Mine area of Quebec Province alone, asbestos mining has resulted in huge quantities of asbestos mine tailings being deposited, often at an annual rate exceeding 30 million tons. These deposits, which appear like barren mountains on a blighted landscape, are a menace to public safety in that they contain residual asbestos (chrysotile) in quantities sufficient to be of concern to health officials because of the tailings' dustiness in dry weather. Environmentally, these man-made mountains are an eyesore and of no real estate value because of the material's resistance to chemical weathering and inability to support plant life. And heretofore, there has been no cost-effective way of dealing with this enormous ecological and health problem.

Occurrences of trapped gases in igneous rocks have been reported by Votov et al., Dokl. Akad. Nauk SSSR, 213, 198-201 (1973), Agafovnov et al., Dokl. Akad. Nauk SSSR, 210, 232-4 (1972) and Petersil'ye et al. (1980). The main constituent of such gases was hydrogen, together with small amounts of hydrocarbons, nitrogen and carbon dioxide. According to the aforementioned authors, the gases were trapped in closed pores of the rock following crystallization and are believed to have originated with outgassing processes from sources within the earth's mantle. In addition, a depth relationship is indicated where hydrogen is the essential gas constituent at depths greater than 70 km while mixtures of hydrogen and hydrocarbons are associated with shallower depths in the region of the upper mantle. Other reports of hydrogen and gas mixtures outgassing at the earth's surface have been reported by Sugisaki, J. Geol., 91, 239-58 (1983) (earthquake outgassing); Oskarsson, J. Volca. Res., 22, 97-121 (1984) (fumaroles associated with rifting) and Gold, EOS (Am. Geophys. Union, Trans.), 59(4), 810 (1978) and J. Pet. Geol. 1(3), 3-19 (1979) (volcanic activities).

Recently, major emanations of hydrogen and other gases in association with highly alkaline spring waters of the calcium hydroxide type occurring along fault and shear discontinuities in partly to wholly serpentinized ultramafic environments from mantle source rocks in Oman have been reported by Neal et al., Earth and Plan. Sci. Let., 66, 315-20 (1983) and from oil wells in Kansas by Goebel et al., Oil & Gas J., 7, 215-22 (1984) and Angino et al., Oil & Gas J., 7, 142-6 (1984). The origin of the gaseous emanations in Oman is ascribed to shearing and post-serpentinization chemical degradation of ultramafic rocks. The Kansas occurrences are attributed to three possible inorganic processes, namely, outgassing of the mantle, shearing, and serpentinization of an ultramafic mass. It is interesting to note that the Kansas occurrences are located above the North American Continental Rift where basaltic and ultramafic rocks have been postulated.

As used herein, the terms "ultramafic rock," "serpentinization" and "deserpentinization" have the following meanings. Ultramafic rocks are those rocks containing less than 45% $SiO_2$ and composed largely of olivine, pyroxene, serpentine, and opaque minerals and can be monomineralic. Serpentinization is the process of converting olivine or pyroxene, by hydration, to the mineral serpentine. The conversion causes the formation of a phyllosilicate from either orthosilicates or inosilicates. Deserpentinization is the reverse of the serpentinization reaction and involves the conversion of phyllosilicates to orthosilicates. In all cases, deserpentinization involves dehydroxylation processes.

A characteristic common to most of the gas occurrences described above is their association with ultramafic rocks. In addition, it is known that carbon in the form of graphite and carbonates is associated with ultramafic rocks of differing origins, i.e., kimberlites ophiolites and komatiites. Pasteris, Geology, 9, 356-9 (1981); Hock, Ofiolite, 5, 57-64 (1980); Smith, in Boyd & Meyer, ed., 2d International Kimberlite Conference Proc. Washington American Geophys Union, 2 345-56 (1979). The carbonates are viewed as being secondary from hydrothermal solutions which are, in most cases, post-serpentinization. I have recognized and confirmed that deserpentinization can cause the release of hydrogen, hydrocarbons and carbon dioxide.

There are two opposing theories regarding the origin of petroleum. One theory favors an organic origin and the other an inorganic origin. In North America the organic theory has prevailed for the past century and is generally accepted while, for example, Russian theorists currently favor an outgassing process for

the origin of petroleum. According to results which I have obtained, at least some petroleum and natural gas deposits appear to be derived from inorganic processes within the earth. Accordingly, deserpentinization and the simultaneous dissociation of carbonate minerals with proper catalysts in ultramafic rocks is claimed as the main mechanism for the generation of hydrogen and hydrocarbons in the form of natural gas within the earth's crust.

Fresh ultramafic rocks are composed essentially of the mineral olivine, $(Fe,Mg)_2SiO_4$; orthopyroxene, $(Fe,Mg)SiO_3$; and clinopyroxene, $(Ca,Fe,Mg)_8(SiO_3)_2$ in various proportions. It is important to note that in all of the above minerals iron is in the ferrous state.

After their formation, the original mineral assemblage may be serpentinized (hydrated) in the presence of water and thereby converted to serpentine minerals, the most common of which are lizardite; chrysotile, $(Mg,Fe)_3Si_2O_5(OH)_4$; brucite, $(Mg,Fe)_8(OH)_2$; magnetite, $Fe_3O_4$; and minor amounts of awaruite, (Fe,Ni). Serpentinization alters the structure of the original minerals by converting them into phyllosilicates having a clay-like strucure and containing as much as 14-15 weight % structural (i.e., chemically bound) water. In these minerals, ferrous iron of the primary olivine and pyroxenes has been redistributed in brucite, lizardite, chrysotile and a small fraction of the iron is converted to ferric iron in magnetite.

According to Moody, Ph.D. dissertation (McGill University, 1974) and Moody, Lithos, 9, 125-38 (1976), the serpentinization process can be represented by the following general equation:

OLIVINE + WATER → SERPENTINE (MIN.) + BRUCITE + MAGNETITE + HYDROGEN

or more precisely:

$$10(Mg_{1.86}\,Fe_{0.14})\,SiO_4 + 14.2\,H_2O \rightarrow 5\,Mg_3Si_2O_5\,(OR)_4 + 3.8(Mg_{0.95}\,Fe_{0.05})\,(OH)_2 + 0.4Fe_3O_4 + 0.4H_2$$

Although the temperature and pressure conditions under which the reaction occurs in nature are still questionable, Moody, supra, in laboratory experiments bracketed the reaction at 335°C +/- 5°C at a pressure of 0.5 bar. On the other hand, O'Neil et al., J. Geophy. Res., 85 (B11), 6286-92 (1980) and Gregory (1981) suggest a serpentinization temperature of approximately 125°C or less, based on data from hydrogen isotope studies.

Serpentinization is a common occurence in nature, and most ultramafic rocks are affected, to a greater or lesser degree. Thus, Gilbert, Masters Thesis (University of Quebec at Montreal, 1981), Trottier, Masters Thesis (University of Quebec at Montreal, 1982) and Tremblay, Masters Thesis (University of Quebec at Montreal, 1985) report that ophiolites with a thickness of as much as 5 to 8 km commonly display a pervasive serpentinization ranging from a few percent to complete serpentinization.

The serpentinization process represented by the equation above is reversible in the laboratory and also occurs in nature. See Moody (1974), supra; Springer, J. Petro., 15 (Part 1), 160-95 (1974); Frost, J. Petro., 16 (Part 2), 272-313 (1975); and Vance, Geol. Soc. Am. Bull., 88, 1497-1508 (1977). In the reverse reaction, the hydroxyl group (OH) or the structural water in the brucite and serpentine minerals is expelled at temperatures between 250° to 700°C. This phenomenon corresponds to the endothermic peaks on the differential thermal analyses curve (DTA) and also to the weight loss on the thermal gravimetric analysis (TGA) curve as shown in FIG.1 for harzburgite. This super-heated (structural) water reacts with ferrous iron from the serpentine minerals and brucite yielding hydrogen and magnetite. For instance, a possible reaction is:

$$3Fe(OH)_2 \rightarrow Fe_3O_4 + 2H_2O + H_2$$

BRUCITE → MAGNETITE + WATER + HYDROGEN.

I have discovered that the complete reverse reaction can be represented by the following:

SERPENTINE + BRUCITE → OLIVINE + MAGNETITE + WATER + HYDROGEN.

The conversion back to a magnesium-enriched olivine, Fo94-Fo96 (i.e., olivine in which forsterite ("Fo") constitutes from 94 to 96% by weight and fayalite correspondingly constitutes from 6 to 4%) is associated with the exothermic peak at 815°C on the DTA curve in FIG.1 (TGA reference measurement (in mg); DTA measurements (in microvolts) based on aluminum oxide or an empty platinum crucible reference). Natural occurrences of deserpentinized ultramafic masses have been described by Dungen, Ph.D. dissertation - (Univ. Washington, 1974), Springer, supra, Frost, supra, and Vance et al., supra. Vance et al., supra, proposes a deserpentinization process for the origin of some large ultramafic masses in the Cascade

Mountains of Washington occurring prior to the emplacement of the body into its present structural position.

Ultramafic rocks such as ophiolite or komatiites often have carbonates associated with them. In some cases, this association has resulted in deposits of economic importance in the form of magnesite and talc. See Chichester, U.S.G.S. Prof. Papers, 345, 207 (1962); Griffis, Econ. Geol., 67, 63-71 (1972); and Dordevic, Geol. Glasnik, Sarojeva, 17, 169-79 (1973). In other instances, the carbonate minerals, dolomite or/and magnesite are disseminated or are found as small veinlets in the ultramafic body. See Vakanjac, et al., in Panayiotov, ed., Ophiolite Symp. Cyprus. Geol. Surv. 722-6 (1980); Gilbert, supra; and Harnois, Masters Thesis (University of Quebec at Montreal, 1982)

The carbonate minerals will partly or completely dissociate producing carbon dioxide and carbon monoxide in the process of deserpentinization at the temperatures which are required:

$$(Fe,Mg)CO_3 \rightarrow FeO + MgO + CO_2 + CO$$

Carbon dioxide can react with the nascent hydrogen at high temperature in the presence of a proper catalyst such as chromium to produce methane:

$$CO_2 + H_2 \rightarrow CH_4$$

More complex hydrocarbons, e.g., benzene, can be generated through catalytic hydrogenation. The catalysts required for the reaction are disseminated in situ in the rocks, and can include nickel, chromium, cobalt and small quantities of the noble metals.

Among the vast quantities of ultramafic materials distributed widely throughout the world, tailings deposited in asbestos mining operations and so-called "float" (dust-like particles which include asbestos fibers of extremely short, unclassifiable length produced during the asbestos milling operation) constitute, as noted earlier, a glaring example, from the standpoint of their resistance to chemical weathering and their notoriously deleterious effect on the environment and public health and safety. This fact, coupled with the existence of mountains of asbestos tailings in areas readily accesible to means of transportation and proximity to sources of heat and electric power has created a need as well as an opportunity to deal with such deposits in an economical way.

Accordingly, it is an object of the present invention to provide a method for deriving products of economic value from ultramafic rock.

## Summary of the Invention

The present invention provides a process for forming hydrogen from ultramafic rock material comprising:

a) pulverizing said ultramafic rock material to form comminuted ultramafic rock material; and

b) heating said comminuted ultramafic rock material under hydrogene atmosphere to a temperature of between 200 and 700 °C at a pressure and for a period of time to cause deserpentinization and consequent formation of hydrogen and a solid residue.

The ultramafic rock material initially can be unserpentinized, partly serpentinized or entirely serpentinized. If the ultramafic rock contains a substantial unserpentinized fraction as indicated by the fact that it contains less than about 9 weight percent structural water (as can be determined by differential thermal analysis, thermogravimetric analysis or the polarizing microscope) or if it is entirely unserpentinized, then it is first contacted with water at a temperature and pressure for a period of time to form an ultramafic rock which is essentially completely serpentinized with concomitant production of hydrogen. The ultramafic material, which was either substantially or entirely serpentinized to begin with (as indicated by the fact that it contained from about 9 to about 15 percent by weight structural water), e.g., the asbestos "float" described hereinabove, or was subjected to serpentinization in the manner aforesaid, is subjected to deserpentinization at conditions of temperature, pressure and time to produce hydrogen and hydrocarbons (generally $C_1$ to $C_5$ saturated and $C_2$ and higher unsaturated hydrocarbons) together with a solid residue of mineral by-products containing magnesium, nickel, chromium, silicon, calcium and other values including noble metals in some cases. The materials subjected to deserpentinization should be as finely divided as possible.

The present invention can also be carried out using, as starting material, clay (i.e. hydrous aluminium silicate and other minerals) containing structural water and possibly ferrous iron which is often found in glacial clay, and subjecting it to the conditions herein specified for ultramafic rock material.

Preferably, the serpentinization step is conducted at a temperature of between about 300° and about

350 °C, at a pressure of between about 0.3 and 0.7 bar. The deserpentinization step is preferably conducted at a temperature of between about 200° (especially when the rock material is high in brucite) and about 700 °C (especially when the material is high in antigorite) at atmospheric pressure (i.e. about 1 bar) for a period of time which can vary widely depending on the other process conditions, but which in most cases will be between about 20 and about 45 minutes. Less desirable (albeit still generally operable) results are obtained at the extremes of the temperature range when the structural water and/or iron contents of the material are low. Most preferred from the standpoint of optimal hydrogen and hydrocarbon formation is a deserpentinization temperature of between about 300° and about 650 °C. Optionally, iron in either the zero (iron powder,$Fe^0$) or +2($Fe^{+2}$) valence state is advantageously added as an adjuvant to the deserpentinization reaction to supplement the iron already contained in the material to enhance the production of hydrogen and hydrocarbons. Other adjuvants, or "boosters", preferably in the powdered state (the finer the better), that can be used are metallic zinc, wood charcoal and petroleum coke. A particularly preferred adjuvant is iron-containing powder in an amount up to about 30% by weight and having the following composition: 4% $SiO_2$, 1.5% C, 2% basic oxide (e.g. Mg, Ca)O, 83% Fe, 10% FeO and traces of chromium, nickel and copper.

It is a feature of a preferred embodiment that when a portion of the hydrogen generated in the serpentinization step and/or a portion of the hydrogen generated in the deserpentinization step are fed, together with calcium carbonate or an equivalent source of carbon, to the deserpentinization reaction mixture, the formation of hydrocarbons is enhanced. This feature is augmented by the co-addition of one or more catalysts for the formation of hydrocarbons which are selected from the group consisting of metallic cobalt, chromium, nickel, zinc, copper and noble metals. Thus catalysts are administered preferably in powdered form in amounts which effectively increase the hydrocarbon yield (e.g., up to about 30% by weight of the sample).

Another feature of the invention is the discovery that when the deserpentinization is carried out at about 700 °C, which is the desired upper temperature limit of the reaction, or when the solid residue obtained following the deserpentinization is heated to between about 700° and less than 815 °C (e.g., up to about 810 °C), the generated minerals assume a transition lattice structure (see FIG. 1). Such a structure is characterized by a metastable, developing crystal lattice which is in a state of transition between an initial, stable, crystal (phyllosilicate) form and a final, stable, crystal (orthosilicate) form. The fact that a transition lattice structure can be imparted to the minerals in the solid residue according to the present invention is significant because magnesium and nickel-containing minerals having such a transition lattice structure have greater susceptibility to dissolution by aqueous mineral acids of widely varying concentration. As a consequence, since the solid residue can thus be readily dissolved, for example, in hydrochloric acid, preferably 1-12 M HCl at ambient temperature, or after slight heating of the solution to 29°-35 °C, the resulting aqueous solution of magnesium, calcium, nickel chloride, silicon, and chromium can be treated by well-known, readily available techniques to win such metal values. By carrying out the deserpentinization within the preferred temperature range of 300°-650 °C, and then heating the solid residue to between about 700° and less than 815 °C in a separate step, the advantageous transition lattice structure can be imparted to the minerals in the residue without compromising the optimalization of the hydrogen and hydrocarbon production. Alternatively, the solid residue can be treated with ammonium sulfate to produce magnesium sulfate under the process conditions described in U.S. Patent 4,277,449 which is incorporated herein by reference; or by treatment with sulfur dioxide to produce magnesium hydroxide or carbonate in the manner described in U.S. Patent 4,124,683 which is incorporated herein by reference. Magnesium sulfate is useful, for example, in making fertilizers as taught in Canadian Patent 1,178,818 incorporated herein by reference. The solid residue from the deserpentinization can also be utilized for making materials of economic value, e.g., having refractory and heat storage capabilities as described in U.S. Patent 4,287,167 and U.S. Patent 4,322,022 incorporated herein by reference.

## Brief Description of the Drawings

FIG 1 is a graphic representation of the thermal properties of one form of ultramafic rock, as described hereinabove.

FIG 2 is a diagrammatic representation of the typical compositions of ultramafic rock material.

FIG. 3 is a schematic representation of the process and means for carrying out the invention according to a preferred embodiment.

## Description of Preferred Embodiments

EXAMPLE 1

Ultramafic rock samples from two ophiolite complexes of the Quebec Appalachian ophiolite belt, namely, Mount Albert in the Gaspe Penninsula and Thetford Mines, the latter being well-known for asbestos production, and whose bulk mineral compositions are shown in FIG. 2, were used as starting materials. Also, a sample of a precambrian komatiite flow from Val d'Or Quebec was used. The petrography and modal evaluation of the materials used in quantitative gas measurements are summarized below in Table 1.

Table 1

| SAMPLE | IDENTIFICATION | LOCALITY | OL | OPX | CPX | SP | MA | SE | CA | TEXTURE | $H_2O$ |
|---|---|---|---|---|---|---|---|---|---|---|---|
| 76-244 MM 3 | Dunite | Mt-Albert | 85 | 10 | -- | -- | -- | 5 | -- | tecto. | 3.4 |
| LO81-1 MM 1-17 | Dunite | Thetford | -- | -- | -- | 2 | 8 | 90 | -- | tecto. | 14.0 |
| VR80-7 | Harz. | Thetford | 30 | 20 | -- | 2 | tr | 50 | tr | tecto. | 9.2 |
| RB80-2 MM 8-18 | Dunite | Thetford | tr | -- | -- | 10 | tr | 90 | tr | cumul. | 14.0 |
| LF81-5 | Dunite | Thetford | -- | -- | -- | 10 | tr | 90 | -- | cumul. | 12.6 |
| SH81-2 | Komatiite | Val d'Or | -- | -- | -- | -- | -- | -- | tr | Spini. | 4.6 |

OL = Olivine
OPX = Ortho-pyroxene
CPX = Clino-Pyroxene
SP = Spinel
MA = Magnetite
SE = Serpentine
CA = Carbonate
Spini. = Spinifex
Harz. = Harzburgite
Tecto. = Tectonic
Cumul. = Cumulite

The first series of runs were qualitative in nature and were made to establish a positive identification of the gases produced using different types of ultramafic rocks (i.e., harzburgite, dunite and pyroxenites) from various stratigraphic levels and with different degrees of serpentinization. The reduction of heated copper oxide by evolved hydrogen and the aromatic odor of hydrocarbons were readily observed and the presence of the gases was subsequently confirmed by gas chromatography for selected samples.

Quantitative measurements of the gases produced during the deserpentinization process was achieved using a simple gas line from which the evolved gases were collected in a smoke stack bag and analyzed by gas chromatography. The starting materials were in the form of 100g of powder heated for equal periods of time to a maximum temperature of approximately 700°C. The results are presented in Table 2.

Table 2

| SAMPLE | IDEN. | OCAL. | $H_2O$ % | $H_2$ % | METH. PPM | ETH. PPM | PRO. PPM | BU. PPM | PEN. PPM | HE. PPM | BEN. PPM | TOL. PPM |
|---|---|---|---|---|---|---|---|---|---|---|---|---|
| 76-244 | DUN. | ALBERT. | 3.4 | 0.3 | -- | -- | -- | -- | -- | -- | -- | -- |
| VR80-7 | HARZ | THETF. | 9.2 | 17.0 | 2500 | 40 | 90 | 60 | 570 | nd | 270 | nd |
| LO81-1 | DUN. | THETF. | 14.0 | 12.5 | 670 | 150 | 150 | 60 | 70 | 3 | 5 | 2 |
| RB80-2 | DUN. | THETF. | 14.0 | 22.0 | 3180 | 90 | 120 | 50 | 30 | nd | nd | nd |
| LF81-5 | DUN. | THETF. | 12.6 | 7.0 | 2760 | 124 | 130 | 20 | 20 | nd | nd | nd |
| BH81-2 | SPIN | VAL D. | 4.6 | 9.0 | 2970 | 120 | 40 | nd | 20 | nd | nd | 4 |
| VR80-7 | HARZ<br>$Fe^{++}/Fe^{o}$ | THETF. | 9.2 | 80.0 | 1860 | 580 | 10 | 100 | 20 | 10 | nd | nd |

DUN. = Dunite
HARZ = Harzburgite
THETF. = Thetford Mines Ophiolite
VAL D. = Val D'Or
SPIN = Spinifex A-2 horizon Komatiite
METH. = Methane
ETH. = Ethane
PRO. = Propane
BU. = Butane
PEN. = Pentane
HE. = Hexane
BEN. = Benzene
TOL. = Toluene

The analytical error is evaluated at 1 to 2% for hydrogen and 15% for the hydrocarbons. The volume of hydrogen is considered to be a minimum owing to substantial loss of gas at the numerous joints in the gas line and through diffusion prior to analyses.

The total gas volume was measured by displacement of a water column saturated with sodium chloride and measured under the same temperature conditions. The total volume was estimated at 200 ml and consisted of 20% hydrogen, 10-15% carbon dioxide, = 1% hydrocarbons, unknown gases and hot air compressed in the sample bag.

The results indicate that a substantial amount of hydrogen is produced if a minimum of structural water is available (i.e., approximately 9%) corresponding to approximately 50% serpentinization. Furthermore, a greater yield is achieved when the amount of magnetite is present only in trace amounts, i.e., when essentially all of the iron is in the ferrous state. The maximum production of hydrogen and hydrocarbons was found to occur at temperature in excess of 400°C corresponding to the dehydroxylation of the serpentine minerals, brucite and to the dissociation of the carbonate minerals.

The hydrogen yield can be increased substantially if an adjuvant such as iron powder (electrolytic powder, $Fe^0$) is added and intimately mixed with the rock powder. By adding 10 g of iron to the reaction, the total gas production was substantially increased (to 4 liters) and was essentially pure hydrogen.

EXAMPLE 2

Referring to FIG. 3, which depicts a preferred set-up for carrying out the invention in either a continuous or batchwise manner, an ultramafic rock, for example, asbestos tailings, is pulverized and/or sieved to a fine mesh size (e.g., -120 mesh or finer) and subjected to a separation procedure whereby the starting material is partitioned into non-serpentine and serpentine fractions. Suitable methods of separation include those based on differences between the non-serpentine and serpentine components of the material with respect to magnetic susceptibility (electromagnetic include those based on differences between the non-serpentine and serpentine components of the material with respect to magnetic susceptibility (electromagnetic separation), dielectric constant (electrostatic separation) or density (flotation separation). The non-serpentine

fraction normally will comprise such components as harzburgite, olivine and orthopyroxene; the serpentine fraction (less dense) can comprise components such as lizardite, brucite, chrysotile and magnetite.

The non-serpentine fraction is then reacted with water at a temperature of about 335°C and pressure of about 0.5 bar under which conditions the material is serpentinized with evolution of hydrogen gas. The evolved hydrogen can, if desired, be used in part in a later step of the overall process as described hereafter, the balance being withdrawn and stored for future use, for example, as a fuel.

The serpentine residue from the serpentinization reaction is combined with the serpentine fraction of the partitioned ultramafic rock which is then subjected to a deserpentinization reaction carried out by heating at a temperature of between about 300°C and about 650°C and atmospheric pressure for a period of time of between about 20 and about 45 minutes in the presence of added iron ($Fe^0$) powder and/or ferrous (Fe+2) ion (e.g., $FeSO_4$, FeS, or $FeCl_2$) which serve as reductant to enhance the yields of hydrogen and hydrocarbons. The materials can be fed to the deserpentinization reaction either in the form of a slurry or preferably in the dry state. The products of the deserpentinization step are hydrogen, hydrocarbons and a solid residue. The hydrogen can be withdrawn to storage as was the hydrogen generated in the earlier-described serpentinization of the non-serpentine fraction of the ultramafic starting material. If desired, any surplus hydrogen generated in either the serpentinization or deserpentinization reactions can be fed to the deserpentinization reaction along with limestone (a source of carbonate) which react together to form additional hydrocarbons and thereby enhance the yield. The hydrocarbons can be drawn off to an appropriate storage facility for subsequent use; for example, the hydrocarbon can furnish at least a portion of the fuel for supplying heat to the overall process, or can be used as a fuel generally, or as a petrochemical fuelstock.

The solid residue from the deserpentinization reaction can be treated in any of the ways described hereinabove. For example, the solid residue from the deserpentinization reaction can be made to consist mainly of a transition crystal lattice having the chemical composition of the mineral olivine. Owing to the fact that this lattice is in a transition form which is metastable, it is much more readily attacked, for example, by HCl (e.g., 2M HCl) than would be the case with normal olivine. This fact greatly increases the usefulness of this residue for the production of $MgCl_2$ by trituration with hydrochloride acid as shown in FIG. 3. The aqueous magnesium chloride can be used as a feedstock for magnesium metal production and for the winning of nickel and other valuable metals.

While the present invention has been described and illustrated hereinabove with reference to specific embodiments, those skilled in the art will recognize that modifications and variations may be made in the process without departing from the the invention as set forth in the following claims.

**Claims**

**1.** A process for forming hydrogen from ultramafic rock material comprising:
a) pulverizing said ultramafic rock material to form comminuted ultramafic rock material; and
b) heating said comminuted ultramafic rock material under hydrogen atmosphere to a temperature of between 200 and 700°C at a pressure and for a period of time to cause deserpentinization and consequent formation of hydrogen and a solid residue.

**2.** A process according to claim 1 wherein said cominuted ultramafic rock material contains a substantial serpentinized fraction and between 9 percent and 15 percent by weight structural water, and the heating step is conducted at a temperature of between 300 and 650°C and at a pressure of one atmosphere.

**3.** A process according to claim 1 which further comprises contacting ultramafic rock material which contains less than 9 percent by weight structural water with water at a temperature of between 300 and 350°C and at a pressure of between 0.3 and 0.7 bar for a period of time to form serpentine and produce hydrogen, prior to subjecting said ultramafic rock material to the heating step.

**4.** A process according to claim 1 wherein the ultramafic material is a float formed as a by-product of the manufacture of asbestos.

**5.** A process for forming hydrogen and hydrocarbons from clay containing structural water which comprises heating said clay under hydrogen atmosphere to a temperature of between 200 and 700°C and at a pressure and for a period of time to cause dehydroxylation and consequent formation of hydrogen and a solid residue.

6. A process according to claim 5 wherein said heating step is conducted for a period of time of between 20 and 45 minutes.

7. A process according to claim 1, 2, 5 or 6 which further comprises adding adjuvant selected from the group consisting of iron in the form of metallic iron or ferrous iron, zinc metal, wood charcoal, and petroleum coke to said ultramafic rock material or said clay prior to the heating step to enhance the production of hydrogen and hydrocarbons during the heating step.

8. A process according to one of claims 1-7 which further comprises recycling said produced hydrogen with calcium carbonate to the heating step to enhance production of hydrocarbons.

9. A process according to claim 8 which further comprises adding a catalyst selected from the group consisting of metallic cobalt, chromium, nickel, zinc, copper and noble metals to said ultramafic rock material or said clay prior to said heating step to further enhance the production of hydrocarbons.

10. A process according to one of claims 1-9 which further comprises heating solid residue having a mineral content of one or more of magnesium, nickel, iron, chromium, silicon or calcium values to a temperature of between 700 and 815 ° C in the presence of hydrogen to impart a transition lattice structure to the mineral content of the residue; and contacting the heated solid residue with a mineral acid to form an aqueous solution of mineral acid salts of said mineral values.

11. A process according to claim 10 wherein the solid residue is contacted with 1 to 12M hydrochloric acid at ambient temperature.

## Revendications

1. Procédé de formation d'hydrogène à partir d'un matériau à base de roche ultramafique, comprenant
   a) la pulvérisation du matériau à base d'une roche ultramafique pour la formation d'un matériau broyé à base de roche ultramafique, et
   b) le chauffage du matériau broyé à base de roche ultramafique en atmosphère d'hydrogène à une température comprise entre 200 et 700 ° C à une pression et pendant une période telles que la roche subit une déserpentinisation et la formation correspondante d'hydrogène et d'un résidu solide.

2. Procédé selon la revendication 1, dans lequel le matériau broyé à base de roche ultramafique contient une fraction serpentinisée importante et 9 à 15 % en poids d'eau dans la structure, et l'étape de chauffage est réalisée à une température comprise entre 300 et 653 ° C et à une pression d'une atmosphère.

3. Procédé selon la revendication 1, qui comprend en outre la mise en contact du matériau à base de roche ultramafique qui contient moins de 9 % d'eau en poids dans la structure, avec de l'eau à une température comprise entre 300 et 350 ° C et à une pression comprise entre 0,3 et 0,7 bar, pendant une période telle qu'il se forme de la serpentine et que de l'hydrogène se dégage, avant le traitement du matériau à base de roche ultramafique par l'étape de chauffage.

4. Procédé selon la revendication 1, dans lequel le matériau à base de roche ultramafique est une matière flottante formée comme sous-produit de la fabrication d'amiante.

5. Procédé de formation d'hydrogène et d'hydrocarbures à partir d'argile contenant de l'eau dans sa structure, qui comprend le chauffage de l'argile en atmosphère d'hydrogène à une température comprise entre 200 et 700 ° C et à une pression et pendant une période telles qu'elles provoquent une déshydroxylation et la formation correspondante d'hydrogène et d'un résidu solide.

6. Procédé selon la revendication 5, dans lequel l'étape de chauffage est réalisée pendant une période comprise entre 20 et 45 mn.

7. Procédé selon la revendication 1, 2, 5 ou 6, qui comporte en outre l'addition d'un adjuvant choisi dans le groupe formé par le fer sous forme de fer métallique ou de fer ferreux, le zinc métallique, le charbon de bois et le coke de pétrole, au matériau à base de roche ultramafique ou à l'argile avant l'étape de

chauffage, afin que la production d'hydrogène et d'hydrocarbures soit accrue pendant l'étape de chauffage.

**8.** Procédé selon l'une quelconque des revendications 1 à 7, qui comporte en outre le recyclage de l'hydrogène produit avec du carbonate de calcium vers l'étape de chauffage afin que la production d'hydrocarbures soit accrue.

**9.** Procédé selon la revendication 8, qui comporte en outre l'addition d'un catalyseur choisi dans le groupe qui comprend le cuivre, le zinc, le nickel, le chrome, le cobalt métalliques et les métaux précieux, au matériau à base de roche ultramafique ou à l'argile avant l'étape de chauffage afin que la production des hydrocarbures soit favorisée.

**10.** Procédé selon l'une des revendications 1 à 9, qui comporte en outre le chauffage du résidu solide ayant des matières minérales contenant une ou plusieurs substances intéressantes contenant du magnésium, du nickel, du fer, du chrome, du silicium ou du calcium, à une température comprise entre 700 et 815 °C en présence d'hydrogène afin qu'une structure à réseau de transition soit donnée aux matières minérales du résidu, et la mise en contact du résidu solide chauffé avec un acide minéral afin qu'une solution aqueuse de sels, d'acide minéral et de ces substances minérales soit formée.

**11.** Procédé selon la revendication 10, dans lequel le résidu solide est mis au contact d'acide chlorhydrique 1M à 12M à la température ambiante.

**Patentansprüche**

**1.** Verfahren zur Bildung von Wasserstoff aus ultramafischem Felsgestein, das folgendes umfasst:
a) Die Pulverisierung von besagtem ultramafischem Felsgestein zur Bildung von feingepulvertem ultramafischem Felsgestein; und
b) Die Erhitzung von besagtem feingepulvertem ultramafischem Felsgestein unter wasserstoff-atmosphärischen Bedingungen bis zu einer Temperatur von zwischen 200 und 700 °C unter Druck und für die Dauer eines Zeitraumes, in dem die Deserpentinisierung und folgliche Bildung von Wasserstoff und einem festen Rückstand verursacht werden.

**2.** Verfahren nach Anspruch 1, wobei besagtes feingepulvertes ultramafisches Felsgestein einen wesentlichen serpentinisierten Bruchteil und zwischen 9 und 15 Gewichtsprozenten Strukturwasser enthält, und die Erhitzungsstufe bei einer Temperatur von zwischen 300 und 650 °C und einem Druck von einer Atmosphäre durchgeführt wird.

**3.** Verfahren nach Anspruch 1, das ferner die Kontaktierung von ultramafischem Felsgestein umfasst, das weniger als 9 Gewichtsprozente Strukturwasser enthält, mit Wasser bei einer Temperatur von zwischen 300 und 350 °C und unter einem Druck von zwischen 0,3 und 0,7 Bar für einen Zeitraum, der die Bildung von Serpentin und die Erzeugung von Wasserstoff gestattet, und zwar bevor besagtes Felsgestein der Erhitzungsstufe unterzogen wird.

**4.** Verfahren nach Anspruch 1, wobei das ultramafische Material ein Schwimmkörper ist, der als Nebenprodukt bei der Herstellung von Asbest gebildet wird.

**5.** Verfahren zur Bildung von Wasserstoff und Kohlenwasserstoffen aus Strukturwasser enthaltendem Ton, das die Erhitzung von besagtem Ton unter wasserstoff-atmosphärischen Bedingungen bis zu einer Temperatur von zwischen 200 und 700 °C unter Druck umfasst, und zwar für die Dauer eines Zeitraumes, in dem die Dehydroxierung und folgliche Bildung von Wasserstoff und einem festen Rückstand verursacht werden.

**6.** Verfahren nach Anspruch 5, wobei besagte Erhitzungsstufe für die Dauer eines Zeitraumes von zwischen 20 und 45 Minuten durchgeführt wird.

**7.** Verfahren nach den Ansprüchen 1, 2, 5 oder 6, das ferner den Zusatz von Hilfsstoffen umfasst, die aus der Gruppe gewählt werden, die aus Eisen in Form von Metalleisen oder eisenhaltigem Metall, Zinkmetall, Holzkohle und Petroleumkoks besteht, und dem besagten ultramafischen Felsgestein oder

besagtem Ton zugesetzt werden, und zwar vor der Erhitzungsstufe, zur Erhöhung der Produktion von Wasserstoff und Kohlenwasserstoffen während der Erhitzungsstufe.

**8.** Verfahren nach einer der Ansprüche 1 bis 7, das ferner das Recycling von besagtem hergestelltem Wasserstoff mit Kalziumkarbonat bis zu der Erhitzungsstufe umfasst, um die Produktion von Kohlenwasserstoffen zu erhöhen.

**9.** Verfahren nach Anspruch 8, das ferner den Zusatz eines Katalysators, gewählt aus der Gruppe, die aus metallischem Kobalt, Chrom, Nickel, Zink, Kupfer und Edelmetallen besteht, umfasst, und zwar als Zusatz zu besagtem ultramafischem Felsgestein oder zu besagtem Ton vor der besagten Erhitzungsstufe zwecks weiterer Erhöhung der Produktion von Kohlenwasserstoffen.

**10.** Verfahren nach einer der Ansprüche 1 bis 9, das ferner die Erhitzung des festen Rückstandes, mit einem Mineralgehalt von einem oder mehreren Magnesium-, Nickel-, Eisen-, Chrom-, Silikon- oder Kalziumwerten umfasst, bis zu einer Temperatur von zwischen 700 und 815 ° C bei Vorhandensein von Wasserstoff, das dem Mineralgehalt des Rückstandes eine vorübergehende Netzwerkstruktur verleiht; und das die Verbindung des erhitzten festen Rückstandes mit einer Mineralsäure zur Bildung einer wässerigen Lösung von Mineralsäuresalzen von besagten Mineralwerten umfasst.

**11.** Verfahren nach Anspruch 10, wobei der feste Rückstand mit 1 bis 12 M Chlorwasserstoff bei ambienter Temperatur in Verbindung gebracht wird.

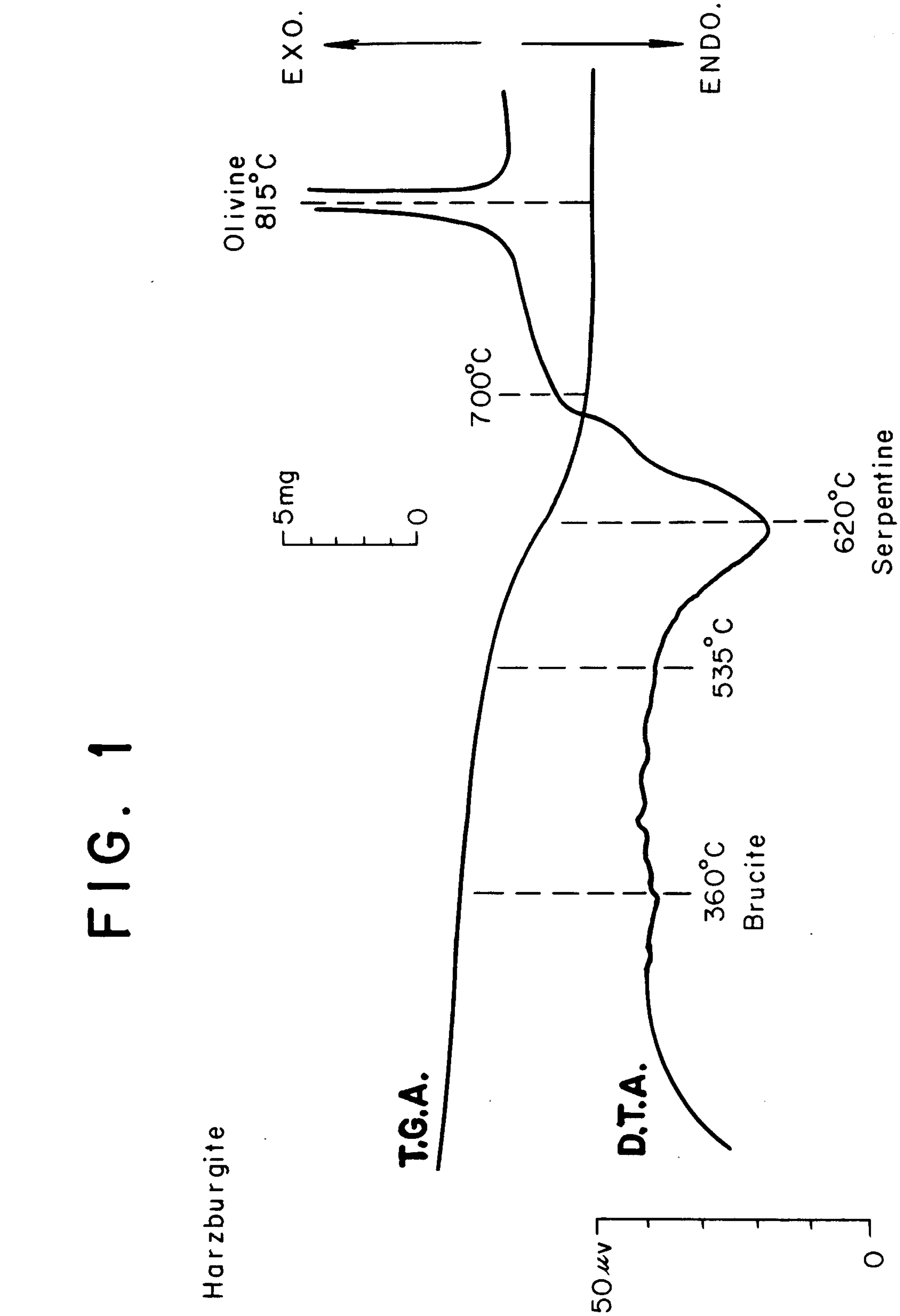
Harzburgite
T.G.A.
D.T.A.
50μv
0
5mg
0
360°C
Brucite
535°C
620°C
Serpentine
700°C
Olivine
815°C
EXO.
ENDO.

FIG. 1

FIG. 2

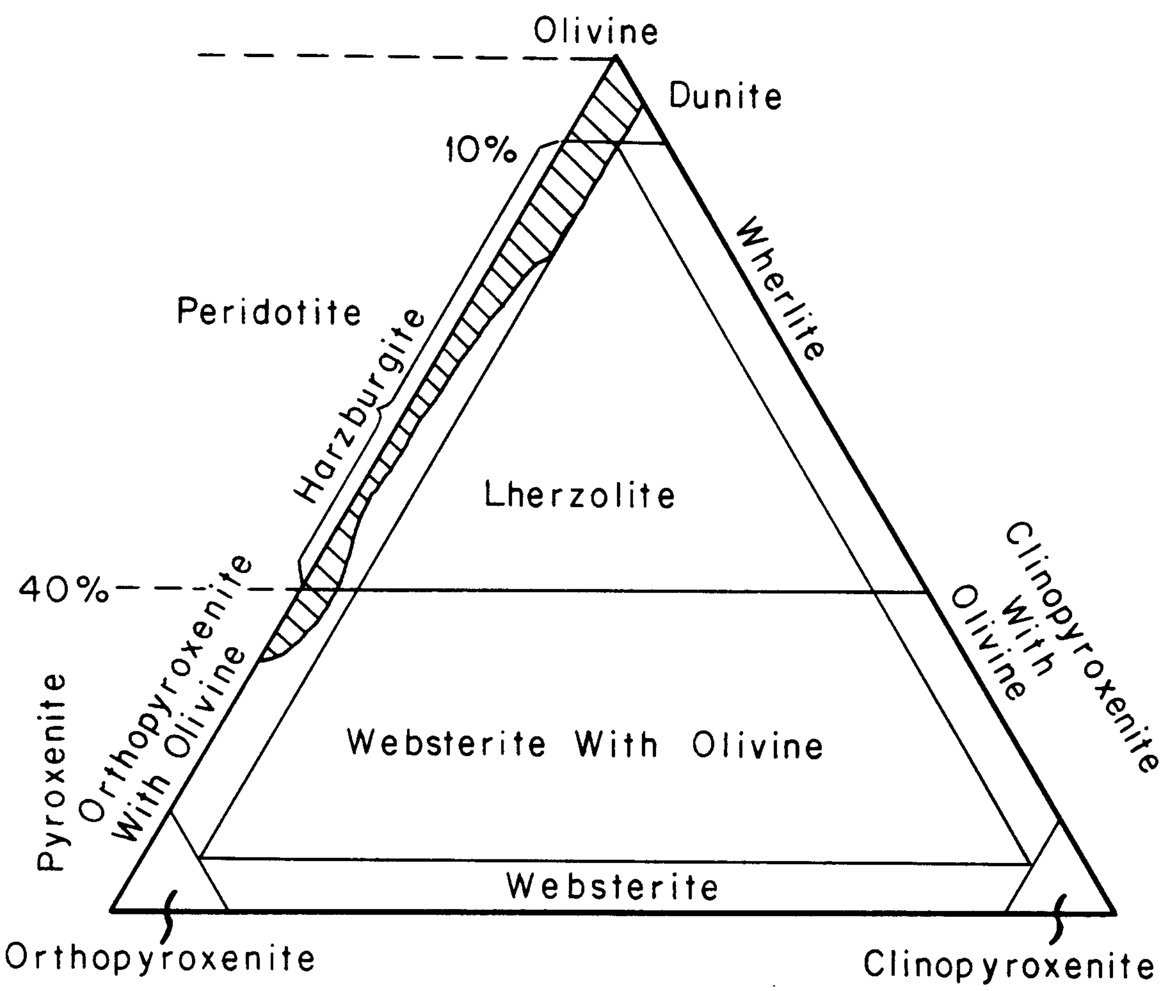
Olivine
Dunite
10%
Wherlite
Peridotite
Harzburgite
Lherzolite
40%
Orthopyroxenite With Olivine
Clinopyroxenite With Olivine
Pyroxenite
Websterite With Olivine
Websterite
Orthopyroxenite
Clinopyroxenite

FIG. 3

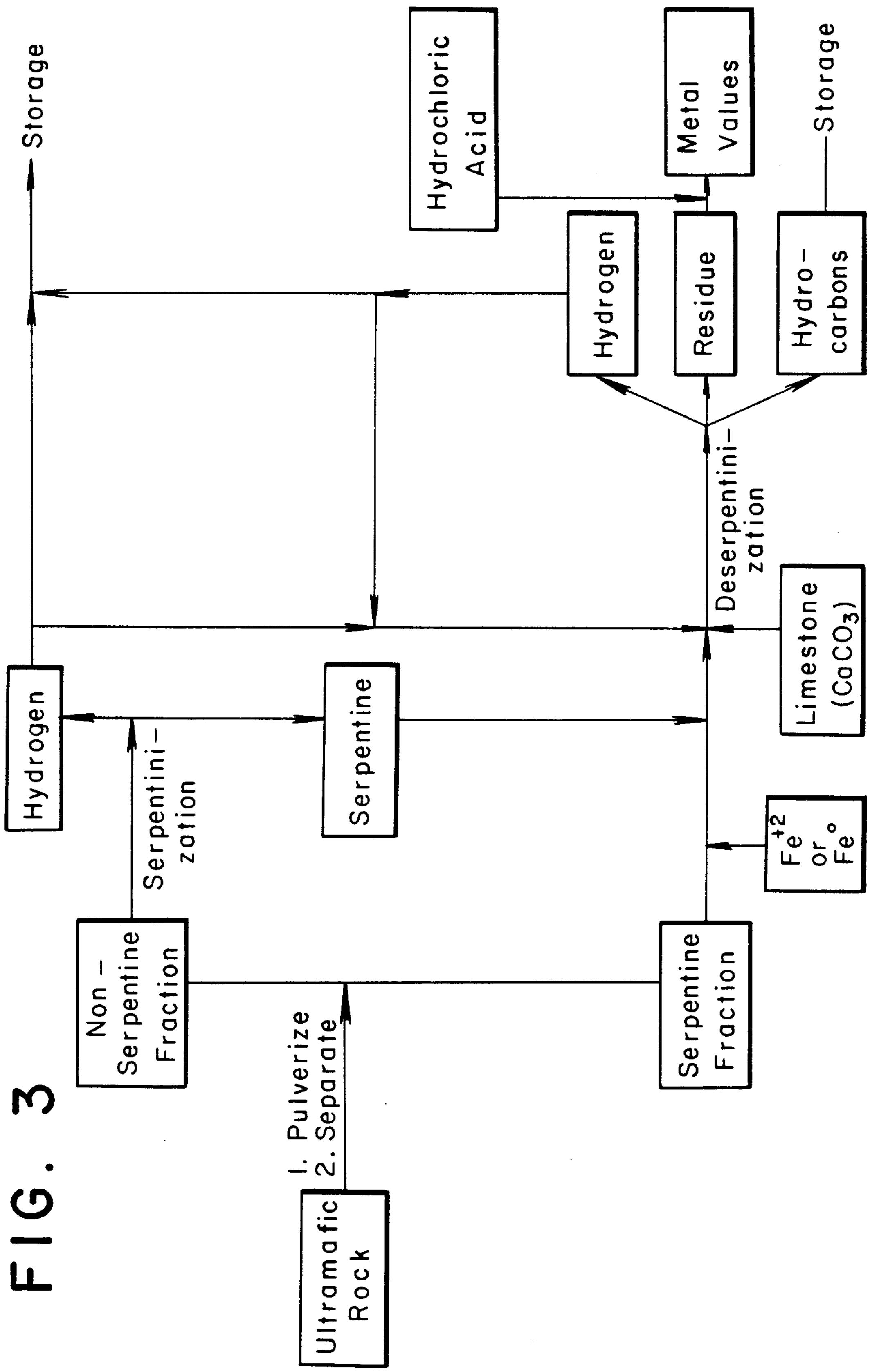
Ultramafic Rock
1. Pulverize
2. Separate
Non - Serpentine Fraction
Serpentine Fraction
Serpentini- zation
Hydrogen
Serpentine
Storage
$Fe^{+2}$ or $Fe^{o}$
Limestone ($CaCO_3$)
Deserpentini- zation
Hydrogen
Residue
Hydro- carbons
Hydrochloric Acid
Metal Values
Storage